(19) Europäisches Patentamt
European Patent Office
Office européen des brevets

(11) **EP 3 882 583 B1**

(12) **EUROPEAN PATENT SPECIFICATION**

(45) Date of publication and mention
of the grant of the patent:
**08.03.2023 Bulletin 2023/10**

(21) Application number: **21162959.7**

(22) Date of filing: **16.03.2021**

(51) International Patent Classification (IPC):
***G01G 19/03*** *(2006.01)* ***G01G 23/10*** *(2006.01)*

(52) Cooperative Patent Classification (CPC):
**G01G 19/035; G01G 23/10**

(54) **WEIGHING APPARATUS**

**WÄGEEINRICHTUNG**

**APPAREIL DE PESÉE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2020 JP 2020049962**

(43) Date of publication of application:
**22.09.2021 Bulletin 2021/38**

(73) Proprietor: **ISHIDA CO., Ltd.
Kyoto-shi,
Kyoto 606-8392 (JP)**

(72) Inventor: **TARUMOTO, Yoshinori
Ritto-shi, Shiga 520-3026 (JP)**

(74) Representative: **Global IP Europe
Patentanwaltskanzlei
Pfarrstraße 14
80538 München (DE)**

(56) References cited:
**EP-A1- 3 121 570 JP-A- 2007 101 333**

**Description**

BACKGROUND OF THE INVENTION

Field of the Invention

The present disclosure relates to a weighing apparatus.

Related Background Art

Conventionally, there is known a weighing apparatus including a conveyance unit in which an article is conveyed, a weighing unit that outputs an original signal corresponding to a weighing component of a load of the article applied to the conveyance unit, a disturbance vibration detecting unit that outputs an original vibration signal corresponding to a disturbance vibration received by the weighing unit, and a processing unit that performs a weighing process for the load of the article based on the original signal and the original vibration signal (for example, JP 2000-39355 A).

EP 3 121 570 A1 discloses a weighing apparatus comprising: a conveyance unit configured to convey an article; a weighing unit configured to output an original signal corresponding to a weighing component of a force applied to the conveyance unit; a disturbance vibration detecting unit configured to output an original vibration signal corresponding to a disturbance vibration received by the weighing unit; and a processing unit configured to perform a weighing process when the article is positioned on the conveyance unit and when the conveyance unit is in operation.

JP 2007-101333 A discloses a weighing apparatus in which filtering digital data is optimized in accordance with weighing condition.

SUMMARY

In the weighing apparatus as described above, a filter characteristics and a sensitivity in predetermined filtering processing are adjusted in accordance with a vibration state or the like of a place where the weighing apparatus is installed. Thus, the detection result of the disturbance vibration detecting unit can be used in the weighing process so as to sufficiently exhibit the weighing performance of the weighing apparatus. However, it is difficult for a simple operator of a weighing apparatus to adjust the filter characteristics and sensitivity in setting the disturbance vibration detecting unit. Therefore, a setting work by a designer or a skilled person of the weighing apparatus is usually required when the detection result of the disturbance vibration detecting unit is used.

An object of an aspect of the present disclosure is to provide a weighing apparatus capable of reducing a burden of setting work of an operator of the weighing apparatus as to whether or not to use an original vibration signal of a disturbance vibration detecting unit in addition to an original signal of a weighing unit when performing a weighing process for a load of an article.

According to the invention specified in claim 1, there is provided a weighing apparatus including: a conveyance unit configured to convey an article, a weighing unit configured to output an original signal corresponding to a weighing component of a force applied to the conveyance unit, a disturbance vibration detecting unit configured to output an original vibration signal corresponding to a disturbance vibration received by the weighing unit, and a processing unit configured to perform a weighing process when the article is positioned on the conveyance unit and when the conveyance unit is in operation. The processing unit is configured to perform a determining process of determining whether to perform the weighing process using the original vibration signal based on both the original signal and the original vibration signal, the original signal and the original vibration signal being output both when the article is not positioned on the conveyance unit and when the conveyance unit is in operation. The processing unit is configured to perform the weighing process according to the determining result of the determining process.

In the weighing apparatus according to an aspect of the present disclosure, the processing unit determines whether to perform the weighing process using the original vibration signal, based on the original signal and the original vibration signal output in case of so-called non-load weighing, the non-load weighing being a case when the article is not positioned on the conveyance unit and when the conveyance unit is in operation. The processing unit performs a weighing process depending on the determining result of the processing unit. Thus, the weighing process according to the situations of the weighing apparatus 1 and the surroundings is performed based on the determining result of the processing unit regarding whether it is more appropriate to use or not to use the original vibration signal of the disturbance vibration detecting unit in addition to the original signal of the weighing unit. The situations of the weighing apparatus 1 and the surroundings include, for example, vibrations of the weighing apparatus itself, vibrations transmitted to the weighing apparatus from the outside, and the like. This makes it possible to dispense with a setting operation, for example, by a designer or expert of the weighing apparatus. Therefore, according to the weighing apparatus, it is possible to reduce the burden of the setting work of the operator of the weighing apparatus as to whether or not to use the original vibration signal of the disturbance vibration detecting unit in addition to the original signal of the weighing unit when performing the weighing process for the load of the article.

In the weighing apparatus according to an aspect of the present disclosure, the processing unit may perform the weighing process using both the original signal and the original vibration signal when the processing unit determines to perform the weighing process using the original vibration signal. The processing unit may perform the weighing process without using the original vibration signal when the processing unit determines not to perform the weighing process using the original vibration signal. According to the above configuration, the weighing apparatus can utilize the determining result of the processing unit to automatically select whether or not the processing unit will use the original vibration signal in performing the weighing process.

In the weighing apparatus according to an aspect of the present disclosure, the weighing apparatus may further include a display unit configured to output display information and an input unit configured to receive a selection-input operation for selecting whether to perform the weighing process using the original vibration signal. The processing unit may cause the display unit to output the display information about comparison of the original signal and the original vibration signal. The processing unit may determine to perform the weighing process using the original vibration signal in response to the selection-input operation received indicating that the original vibration signal is used in the weighing process. The processing unit may determine not to perform the weighing process using the original vibration signal in response to the selection-input operation received indicating that the original vibration signal is not used in the weighing process. According to the above configuration, the operator of the weighing apparatus can select whether or not to perform the weighing process using the original vibration signal through the input unit by referring, for example, to the information about the comparison regarding the original signal and the original vibration signal displayed on the display unit.

In the weighing apparatus according to an aspect of the present disclosure, the processing unit may generate a weighing signal obtained by filtering the original signal with a predetermined digital filter and a vibration signal obtained by filtering the original vibration signal with the predetermined digital filter. The processing unit may generate a first weighing value candidate based on the weighing signal. The processing unit may generate a second weighing value candidate based on both the weighing signal and the vibration signal. The processing unit may perform a comparison between the first weighing value candidate and the second weighing value candidate. The processing unit may perform the determining process based on a result of the comparison. According to the above configuration, it can be determined whether it is more appropriate to use or not to use the original vibration signal of the disturbance vibration detecting unit based on the result of the comparison between the first weighing value candidate and the second weighing value candidate.

In the weighing apparatus according to an aspect of the present disclosure, the processing unit may compare a smallest first standard deviation of a waveform of the first weighing value candidate with a smallest second standard deviation of a waveform of the second weighing value candidate as the comparison. According to the above configuration, one of the waveform of the first weighing value candidate and the waveform of the second weighing value candidate having, for example, a smaller degree of variation in amplitude can be adopted as a candidate suitable for the weighing apparatus and the surrounding situation.

According to an aspect of the present disclosure, it is possible to reduce the burden of the setting work of the operator of the weighing apparatus as to whether or not to use the original vibration signal of the disturbance vibration detecting unit in addition to the original signal of the weighing unit when performing the weighing process for the load of the article.

BRIEF DESCRIPTION OF THE DRAWINGS

FIG. 1 is a schematic configuration diagram of a weighing apparatus according to an embodiment.
FIG. 2 is a diagram showing a functional configuration of the controller.
FIG. 3 is a flowchart showing an example of processing of the weighing apparatus of FIG. 1.
FIG. 4 is a flowchart showing another example of processing of the weighing apparatus of FIG. 1.
FIG. 5 is a schematic configuration diagram of a weighing apparatus according to a modification.

DETAILED DESCRIPTION

Hereinafter, embodiments according to the present disclosure will be described in detail with reference to the drawings. In the drawings, the same or corresponding parts are denoted by the same reference numerals, and redundant description will be omitted.

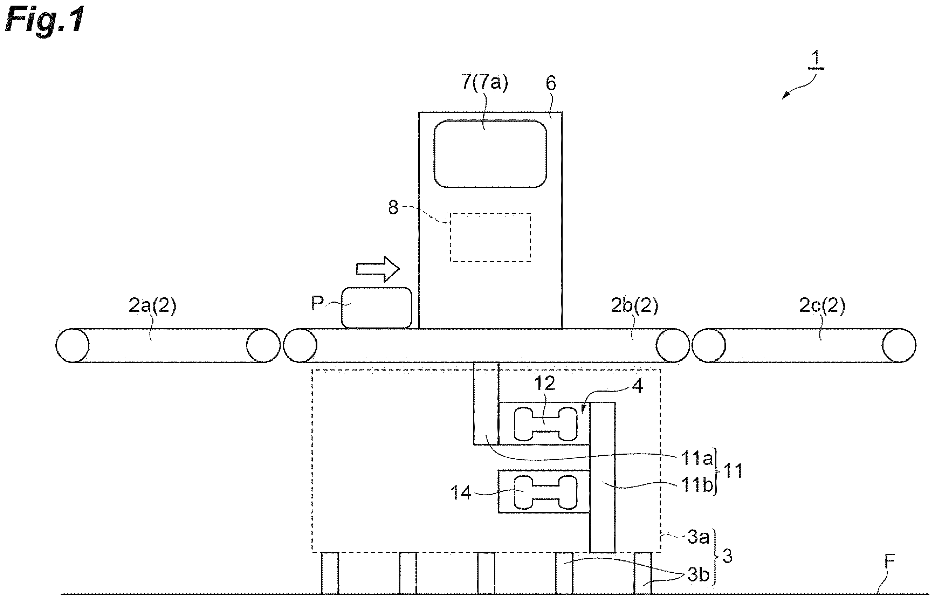

FIG. 1 is a schematic block diagram of a weighing apparatus according to an embodiment. The weighing apparatus 1 shown in FIG. 1 is an apparatus for weighing an object to be measured while conveying the object in the direction of the arrow in FIG. 1 (hereinafter simply referred to as "conveying direction"). The weighing apparatus 1 is, for example, an apparatus arranged in the final line of the production line. The measurement target is, for example, an article P extending along the conveying direction. The weighing apparatus 1 includes a conveyance unit 2, a frame 3, a weighing unit 4, an operating unit 6, and an Anti Floor Vibration (AFV) cell 14.

The conveyance unit 2 is a transfer device capable of conveying an article P along a conveying direction. The conveyor unit 2 is, for example, a conveyor. The conveyance unit 2 conveys the article P at a conveyance speed designated via the operating unit 6, for example. The conveyance speed is specified via the operating unit 6. The conveyance unit 2 includes a first conveyor part 2a, a second conveyor part 2b, and a third conveyor part 2c. Each of the first conveyor part 2a, the second conveyor part 2b, and the third conveyor part 2c includes, for example, a rotating member such as a roller or a motor, a conveying belt, and the like. The first conveyor part 2a, the second conveyor part 2b, and the third conveyor part 2c are arranged in order from the upstream side in the conveying direction. That is, the second conveyor part 2b is located between the first conveyor part 2a and the third conveyor part 2c in the conveying direction. The first conveyor part 2a is a conveyor for carrying the article P into the second conveyor part 2b. The first conveyor part 2a may include, for example, a metal detector (not shown). The second conveyor part 2b is a conveyor that conveys the article P conveyed from the first conveyor part 2a into the third conveyor part 2c. The third conveyor part 2c is a conveyor for carrying out the article P from the second conveyor part 2b. The third conveyor part 2c has, for example, a rejecting device (not shown) for sorting the article P whose weight deviates from the proper range.

The second conveyor part 2b is equipped with a weighing unit 4. Therefore, the articles P conveyed by the conveyance unit 2 are weighed on the second conveyor part 2b. A sensor for detecting the presence or absence of the article P may be provided on each of the upstream side and the downstream side of the second conveyor part 2b. In this case, it is possible to easily determine whether the entire article P is positioned on the second conveyor part 2b.

The frame 3 is a member that houses the weighing unit 4. The frame 3 is fixed to floor F below the conveyance unit 2. The frame 3 has a body 3a and a plurality of legs 3b. The body 3a houses a weighing unit 4 and the AFV cell 14. The legs 3b are located between the body 3a and the floor F. In FIG. 1, the body 3a is shown in dashed lines.

The weighing unit 4 is a detector that weighs the article P located on the second conveyor part 2b. The weighing unit 4 is located, for example, in the middle of the conveyor unit 2. The weighing unit 4 includes a strain body 11 and a weighing cell 12. The strain body 11 is subjected to compression and tension according to a force applied to the conveyance unit 2. The weighing cell 12 weighs the article P located on the second conveyor part 2b. The strain body 11 includes a movable rigid body part 11a and a fixed rigid body part 11b. The movable rigid body part 11a supports the second conveyor part 2b. The fixed rigid body part 11b is fixed to the frame 3. Each of the movable rigid body part 11a and the fixed rigid body part 11b is, for example, a member extending in the vertical direction. One end of the movable rigid body part 11a is connected to the upstream end of the second conveyor part 2b. The other end of the movable rigid body part 11a is connected to a weighing cell 12. One end of the fixed rigid body part 11b is connected to the weighing cell 12. The other end of the fixed rigid body part 11b is connected to the body 3a of the frame 3. Although not shown, in the weighing cell 12, a plurality of strain gauges attached to the strain body 11 are connected to a Wheatstone bridge circuit.

The AFV cell 14 is a detector that detects disturbance vibration of the weighing apparatus 1 including the weighing cell 12. The AFV cell 14 is provided in the fixed rigid body part 11b of the weighing cell 12. The AFV cell 14 detects vibrations transmitted from the floor F on which the weighing apparatus 1 is disposed to the weighing apparatus 1, vibration of the conveyance unit 2, and the like. Specifically, the AFV cell 14 detects vibrations of the conveyance unit 2, such as vibrations of the first conveyor part 2a and the third conveyor part 2c connected to the frame 3. The AFV cell 14 detects the disturbance vibration received by the weighing unit 4. The AFV cell 14 outputs an original vibration signal corresponding to the disturbance vibration.

In this embodiment, the weighing unit 4 has an A/D converter in addition to the strain body 11, the weighing cell 12, and the AFV cell 14. The weighing cell 12 extracts an electric signal corresponding to the force transmitted from the strain body 11 from the Wheatstone bridge circuit. This electrical signal is an analog original signal corresponding to a weighing component of the force applied to the second conveyor part 2b. The original vibration signal output from the AFV cell 14 is an analog original signal. These analog original signals are converted into digital original signals and digital original vibration signals by an A/D converter. The weighing unit 4 outputs the digital original signal and the digital original vibration signal to the outside (hereinafter, simply referred to as "original signal" and "original vibration signal"). Thus, it is possible to reduce the amount of data output from the weighing unit 4 to the operating unit 6.

The weighing unit 4 outputs an original signal corresponding to the weighing component of the force applied to the second conveyor part 2b. The weighing component is a component in a vertically downward direction of the force (load) applied to the second conveyor part 2b. If no article P is located on the second conveyor part 2b when the conveyance unit 2 is in operation, a force due to the vibration generated by the weighing apparatus 1 and a force due to the vibration generated by the surroundings of the weighing apparatus 1 are applied to the second conveyor part 2b. The vibration generated by the weighing apparatus 1 includes vibration caused by the operation of the conveyance unit 2, vibration generated when the article P is conveyed to the conveyance unit 2, and the like. The vibration generated around the weighing apparatus 1 includes, for example, vibration transmitted from a floor surface on which the weighing apparatus 1 is placed (floor vibration). The floor vibration is, for example, vibration caused by an apparatus installed in a production line of the article P including the weighing apparatus 1, an apparatus not included in the production line, or the like. When the article P is positioned on the second conveyor part 2b when the conveyance unit 2 is in operation, a force due to gravity acting on the article P is applied to the second conveyor part 2b in addition to the force due to vibration generated by the weighing apparatus 1 and the force due to vibration generated by the surroundings of the weighing apparatus 1.

The operating unit 6 is a control panel for operating the conveyance unit 2 and the weighing unit 4. The operating unit 6 is erected in the vicinity of the second conveyor part 2b, for example. The operating unit 6 includes a display interface (display unit, input unit) 7 and a controller 8.

The display interface 7 is a display unit that displays display information output from the controller 8. The display interface 7 displays, for example, a weighing value indicating the weight of the weighed article P, accuracy information indicating the weighing accuracy of the article P, the conveyance speed of the conveyance unit 2, the size of the article P along the conveying direction, the conveyance frequency of the article P, the weighing pitch of the article P, and the like. In the present embodiment, the display interface 7 includes a touch panel 7a that functions as an external input unit. When the display interface 7 receives an input from an operator, input information indicating the input content is output to the controller 8. The input information is, for example, data on the conveyance speed of the conveyance unit 2, the size of the article P along the conveying direction, the type of the article P, the conveyance frequency of the article P, and the like. The conveyance frequency of the article P is set, for example, based on the capacity of the production machine located upstream of the weighing apparatus 1.

Each of the weighing value and the accuracy information of the article P is data obtained based on the original signal output from the weighing unit 4 to the operating unit 6. The weighing pitch of the article P is calculated by the controller 8 based on the conveyance speed of the conveyance unit 2, the size of the article P, and the conveyance frequency of the article P.

The controller 8 is a controller that controls each member included in the weighing apparatus 1. The controller 8 is built in the operating unit 6. The controller 8 includes a central processing unit (CPU), a random access memory (RAM), a read only memory (ROM), and the like. The controller 8 outputs, for example, an operation signal for controlling the conveyance speed of the conveyance unit 2 to the conveyance unit 2. The conveyance speed of the conveyance unit 2 may be designated via the display interface 7. For example, when the third conveyor part 2c is provided with a rejecting device and the controller 8 determines that the weight of the article P deviates from a preset appropriate range, the controller 8 outputs an operation signal to the rejecting device so that the article P is distributed (excluded from the line). The controller 8 not only controls the respective units included in the weighing apparatus 1 but also receives, calculates, and transmits various signals. The controller 8 not only controls each unit included in the weighing apparatus 1 but also performs recording and reading of various signals. An example of the calculation of various signals by the controller 8 is the derivation of the weighing result of the article P. That is, the controller 8 is a processing unit that performs a weighing process when the article P is positioned on the second conveyor part 2b and when the conveyance unit 2 is in operation based on at least the original signal. Therefore, the controller 8 includes, for example, a drive circuit for outputting a control signal to the conveyance unit 2, a drive circuit for calculating the weighing value of the article P from the original signal generated by the weighing unit 4, a drive circuit for calculating the accuracy information from the original signal, and a storage circuit for storing each signal and each information.

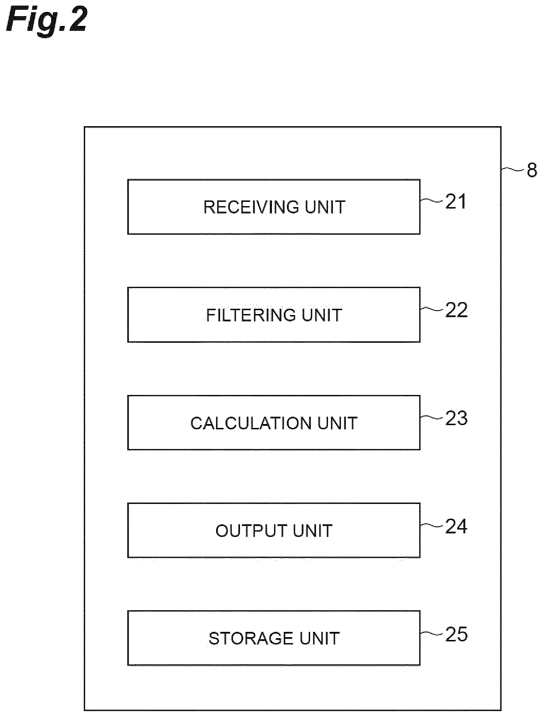

FIG. 2 is a diagram illustrating a functional configuration of a controller. As shown in FIG. 2, the controller 8 includes a receiving unit 21, a filtering unit 22, a calculation unit 23, an output unit 24, and a storage unit 25.

The receiving unit 21 is, for example, a part that receives an original signal and an original vibration signal output from the weighing unit 4 and input information transmitted from the display interface 7. The output of the original signal and the original vibration signal to the receiving unit 21 may be performed via a wire. The output of the original signal and the original vibration signal to the receiving unit 21 may be performed via radio. The transmission of the input information from the display interface 7 to the receiving unit 21 may be performed via a wire. The transmission of the input information from the display interface 7 to the receiving unit 21 may be performed via radio. The receiving unit 21 may receive data other than the original signal, the original vibration signal, and the input information.

The filtering unit 22 is a unit for filtering the original signal and the original vibration signal using a plurality of digital filters stored in advance. Each of the plurality of digital filters includes a low-pass filter and a notch filter (band-stop filter). The low-pass filter attenuates frequency components exceeding a predetermined frequency. The notch filter attenuates the frequency noise of the rotating body included in the conveyance unit 2. That is, when at least some of the plurality of digital filters are selected, the filtering unit 22 may perform multistage filtering processing on the original signal and the original vibration signal. Each digital filter may include one or more low-pass filters and one or more notch filters. Each of the plurality of digital filters may include a low-pass filter having a different attenuation amount in a frequency band, or may include a notch filter attenuating a different frequency band. The low-pass filter may be a variable filter described in, for example, Japanese Patent No. 5901126.

The filtering unit 22 performs filtering processing on the original signal and the original vibration signal using one digital filter selected from a plurality of digital filters when the conveyance unit 2 is in operation and during conveyance of the article P. The filtering unit 22 generates a signal after filtering processing. The filtering unit 22 generates a weighing signal and a vibration signal as signals after filtering processing. The weighing signal is obtained by filtering processing the original signal with one selected digital filter. The vibration signal is obtained by filtering processing the original vibration signal with the digital filter.

More specifically, filtering unit 22 applies each of the plurality of digital filters to the original signal obtained both when the conveyance unit 2 is in operation and when the article P is not being conveyed by conveyance unit 2. In the following description, "both when the conveyance unit 2 is in operation and when the article P is not conveyed by the conveyance unit 2" is also referred to as "during non-load weighing" of the conveyance unit 2. In other words, the filtering unit 22 performs filtering processing of applying each of the plurality of digital filters to the original signal during non-load weighing of the conveyance unit 2. Accordingly, the filtering unit 22 generates a plurality of weighing signals as a result of applying each of the plurality of digital filters to the original signal obtained during the non-load weighing of the conveyance unit 2.

The filtering unit 22 applies each of the plurality of digital filters to the original vibration signal obtained during non-load weighing of conveyance unit 2. In other words, the filtering unit 22 performs filtering processing of applying each of the plurality of digital filters to the original vibration signal during non-load weighing of the conveyance unit 2. Accordingly, the filtering unit 22 generates a plurality of vibration signals as a result of applying each of the plurality of digital filters to the original vibration signal obtained during the non-load weighing of the conveyance unit 2.

In the present embodiment, the signal output from the weighing unit 4 when non-load weighing is performed on the conveyance unit 2 at the conveyance speed to be performed designated via the display interface 7 corresponds to the original signal and the original vibration signal obtained both when the conveyance unit 2 is in operation and when the article P is not conveyed by the conveyance unit 2. For example, when the plurality of digital filters include a first filter, a second filter, and a third filter, filtering processing is performed on the original signal and the original vibration signal using the first filter, the second filter, and the third filter, respectively. Thus, the filtering unit 22 obtains a first weighing signal obtained by applying the first filter, a second weighing signal obtained by applying the second filter, and a third weighing signal obtained by applying the third filter. The filtering unit 22 obtains a first vibration signal obtained by applying the first filter, a second vibration signal obtained by applying the second filter, and a third vibration signal obtained by applying the third filter. The digital filter used for generating the vibration signal and the digital filter used for generating the weighing signal may be the same or different.

Whether or not the conveyance unit 2 is performing non-load weighing may be determined by an operator or may be automatically determined by the weighing apparatus 1. For example, the weighing apparatus 1 may automatically determine that the conveyance unit 2 is in the non-load weighing state if non-detection state of the sensor for article detection provided in the weighing apparatus 1 continues for a predetermined time or more when the conveyance unit 2 is in operation.

The filtering unit 22 outputs the plurality of weighing signals and the plurality of vibration signals to the calculation unit 23, the storage unit 25, and the like.

The calculation unit 23 is a part that performs arithmetic processing on various input signals. The calculation unit 23 performs a weighing process for calculating a weighing value both when the article P is positioned on the second conveyor part 2b and when the conveyance unit 2 is in operation. The weighing value is a value of the weight of the article P calculated based on at least the weighing signal output from the filtering unit 22. Here, the calculation unit 23 performs the determining process of whether to perform the weighing process using the original vibration signal based on the original signal and the original vibration signal output both when the article P is not positioned on the second conveyor part 2b and when the conveyance unit 2 is in operation. The calculation unit 23 performs the weighing process according to the determining result of the determining process.

Weighing processes include, for example, a first weighing process and a second weighing process. The first weighing process is a weighing process performed using only the original signal of the weighing cell 12 and not the original vibration signal of the AFV cell 14. In the first weighing process, only the weighing signal both when the article P is located on the second conveyor part 2b and when the conveyance unit 2 is in operation is used. The second weighing process is a weighing process performed using the original vibration signal of the AFV cell 14 in addition to the original signal of the weighing cell 12. In the second weighing process, a vibration signal is used in addition to the weighing signal both when the article P is positioned on the second conveyor part 2b and when the conveyance unit 2 is in operation.

The calculation unit 23 here automatically selects a content of the weighing process (the first weighing process or the second weighing process) according to the determining result of the determining process. More specifically, the calculation unit 23 performs the first weighing process without using the original vibration signal when the calculation unit 23 determines that the weighing process using the original vibration signal as the determining result of the determining process is not performed. On the other hand, the calculation unit 23 performs the second weighing process using both the original signal and the original vibration signal when the calculation unit 23 determines that the weighing process using the original vibration signal as the determining result of the determining process is to be performed.

As an example of the determining process, the calculation unit 23 generates a first weighing value candidate based only on the weighing signal and a second weighing value candidate based on the vibration signal in addition to the weighing signal. The calculation unit 23 performs a comparison between the first weighing value candidate and the second weighing value candidate. The calculation unit 23 performs the determining process based on the result of the comparison. The first weighing value candidate and the second weighing value candidate are candidates of the weighing value of the article P for the calculation unit 23 to perform the weighing process.

Specifically, the calculation unit 23 uses, as the first weighing value candidate, the weighing signal itself both when the article P is located on the second conveyor part 2b and when the conveyance unit 2 is in operation. As a second weighing value candidate, the calculation unit 23 subtracts the vibration signal from the weighing signal according to a predetermined calculation formula to correct an error of the weighing signal caused by the disturbance vibration. That is, the calculation unit 23 generates a corrected weighing signal by removing the vibration signal component from the weighing signal. That is, the calculation unit 23 uses, as the second weighing value candidate, the weighing signal after correction both when the article P is located on the second conveyor part 2b and when the conveyance unit 2 is in operation. The calculation unit 23 may add a predetermined coefficient to the term including the vibration signal and remove the vibration signal component from the weighing signal. As the predetermined calculation formula, for example, the following formula (1) can be used.

$$M_{AFV} = M - a \times (S-S_0) \quad ...(1)$$

In Equation (1) above, $M_{AFV}$ is the corrected weighing signal. M is the weighing signal. S is the vibration signal. $S_0$ is the vibration center of S. $S_0$ is a value set in advance according to the AFV cell 14, for example. $S_0$ may be calculated from an average value of S or the like. Coefficient "a" is a predetermined coefficient for optimizing the corrected weighing signal. The coefficient a can be determined, for example, by searching a round-robin method at predetermined numerical intervals so that the accuracy information of the weighing signal after correction (the accuracy information of the second weighing value candidate) becomes optimal for each of the plurality of digital filters.

The accuracy information is calculated, for example, based on a standard deviation of the amplitudes of the waveforms included in the first weighing value candidate and the second weighing value candidate. The calculation result may be the standard deviation itself of the amplitude of the waveform. The calculation result may be a parameter based on the standard deviation. The accuracy information here is, for example, standard deviations of the amplitude of the waveforms included in each of the first weighing value candidate and the second weighing value candidate.

The calculation unit 23 determines which of the first weighing value candidate and the second weighing value candidate has better accuracy information. The calculation unit 23 generates the weighing value of the article P using the weighing value candidate determined to be better. Specifically, the calculation unit 23 compares the standard deviation of the amplitude for each waveform of the first weighing value candidate. The calculation unit 23 selects the smallest standard deviation (first standard deviation). The first standard deviation is a standard deviation that optimizes the first weighing value candidate. Similarly, the calculation unit 23 compares the standard deviation of the amplitude for each waveform of the second weighing value candidate. The calculation unit 23 selects the smallest standard deviation (second standard deviation). The second standard deviation is a standard deviation that optimizes the second weighing value candidate.

For example, when the plurality of digital filters includes a first filter, a second filter, and a third filter, the calculation unit 23 calculates a standard deviation of an amplitude of a waveform included in the first weighing value candidate to which the first filter is applied, a standard deviation of an amplitude of a waveform included in the first weighing value candidate to which the second filter is applied, and a standard deviation of an amplitude of a waveform included in the first weighing value candidate to which the third filter is applied. Subsequently, the calculation unit 23 selects the smallest standard deviation among these three standard deviations as a first standard deviation.

Similarly, the calculation unit 23 calculates a standard deviation of an amplitude of a waveform included in the second weighing value candidate to which the first filter is applied, a standard deviation of an amplitude of a waveform included in the second weighing value candidate to which the second filter is applied, and a standard deviation of an amplitude of a waveform included in the second weighing value candidate to which the third filter is applied. Subsequently, the calculation unit 23 selects the smallest standard deviation among these three standard deviations as a second standard deviation.

The calculation unit 23 compares the first standard deviation with the second standard deviation to determine which of the first weighing value candidate and the second weighing value candidate has better accuracy information. That is, the calculation unit 23 determines whether the second standard deviation is equal to or less than the first standard deviation as a comparison. The calculation unit 23 determines to perform the weighing process using the original vibration signal when the calculation unit 23 determines that the second standard deviation is equal to or less than the first standard deviation. The calculation unit 23 performs the second weighing process according to the determining result of the determining process. If the calculation unit 23 determines that the second standard deviation is larger than the first standard deviation, The calculation unit 23 determines not to perform the weighing process using the original vibration signal. The calculation unit 23 performs the first weighing process according to the determining result of the determining process. The calculation unit 23 selects, as the digital filter of the first weighing value candidate or the second weighing value candidate for which the accuracy information is determined to be better, the digital filter that provides the smallest standard deviation among the plurality of standard deviations. The calculation unit 23 outputs information on the selected digital filter to the storage unit 25.

The waveforms included in the first and second weighing value candidates include vibrations generated by the weighing apparatus 1 and the surroundings. The vibration becomes noise to the weighing of the article P. Therefore, as a result of comparing the standard deviation of the amplitude of the waveform included in the first weighing value candidate with the standard deviation of the amplitude of the waveform included in the second weighing value candidate, it can be determined that the noise to the weighing of the article P is smaller when the first weighing value candidate or the second weighing value candidate having the smaller standard deviation of the amplitude is used.

Calculation unit 23 generates the weighing value of article P using the first weighing value candidate or the second weighing value candidate determined to be better. The calculation unit 23 outputs the weighing value of the produced article P to the output unit 24. The calculation unit 23 calculates a weighing pitch (weighing interval) of the article P based on the conveyance speed of the conveyance unit 2, the size of the article P, and the conveyance frequency that are input. The calculation unit 23 determines whether or not the weight of the article P deviates from a preset appropriate range based on the weighing value. In accordance with the determination result, the calculation unit 23 outputs an operation signal to, for example, the rejecting device.

The output unit 24 outputs, for example, various information and various signals generated by the controller 8 and various information and various signals stored in the storage unit 25 to the outside. The output unit 24 may output a weighing value, accuracy information, a weighing pitch, and the like of the article P to the display interface 7 as display information. The output unit 24 outputs an operation signal for controlling the conveyance speed of the conveyance unit 2 to the conveyance unit 2. The output unit 24 outputs an operation signal for the rejecting device to the rejecting device. The output of the operation signal from the output unit 24 to the conveyance unit 2 and the like may be performed via a wire or may be performed wirelessly.

The storage unit 25 is a storage medium that stores input information input via the display interface 7 and various types of information and signals generated by the controller 8. The storage unit 25 stores a plurality of digital filters in advance. The storage unit 25 may store the digital filter of the first weighing value candidate or the second weighing value candidate determined to have better accuracy information. The storage unit 25 may store a default digital filter that may be initially used.

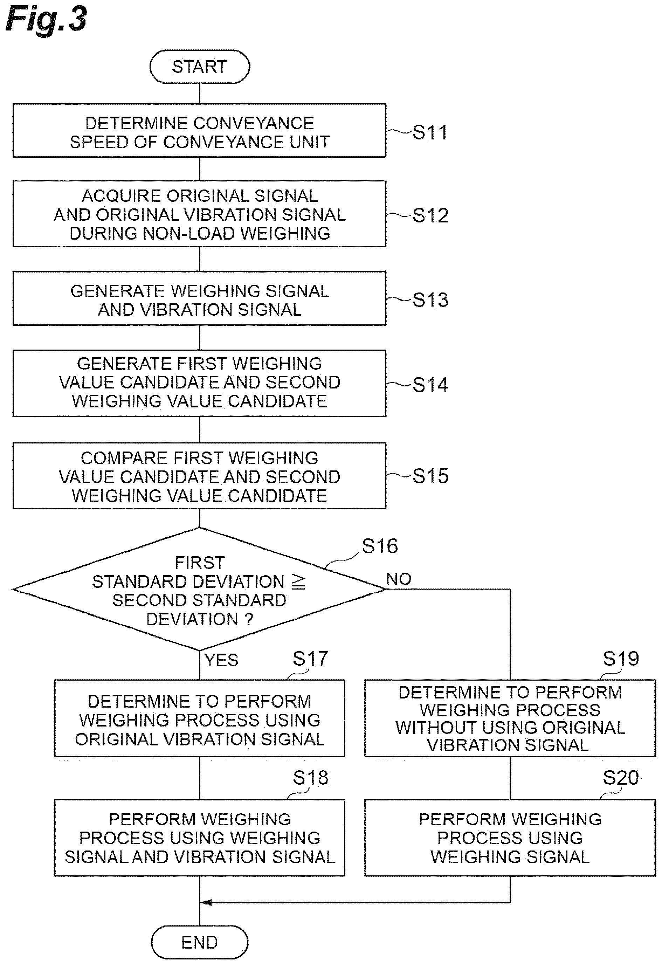

Next, with reference to FIG. 3, each processing by the controller 8 of the weighing apparatus 1 will be described. FIG. 3 is a flowchart showing an example of the processing of the weighing apparatus 1. The process of FIG. 3 may begin before weighing apparatus 1 performs a weight check on article P.

First, the controller 8 determines the conveyance speed of the conveyance unit 2 (Step S11). In Step S11, the conveyance speed of the conveyance unit 2 is designated via the display interface 7. At this time, an operator may input the conveyance speed itself of the conveyance unit 2 via the display interface 7. An operator may input the conveyance frequency of the article P.

The controller 8 acquires an original signal and an original vibration signal in a state where the article P is not conveyed when the conveyance unit 2 is in operation (during non-load weighing of the conveyance unit 2) (Step S12). In Step S12, for example, the weighing unit 4 acquires an original signal and an original vibration signal when the conveyor unit 2 is subjected to non-load weighing for predetermined period (about 5 seconds, for example) at a designated conveyor speed before weighing the article P. The obtained original signal and original vibration signal are output to the controller 8.

The controller 8 generates a weighing signal and a vibration signal for the acquired original signal and original vibration signal (Step S13). In Step S13, the filtering unit 22 performs filtering processing by applying each of a plurality of digital filters to the original signal and the original vibration signal. Accordingly, the filtering unit 22 generates a plurality of weighing signals and vibration signals.

The controller 8 generates a first weighing value candidate and a second weighing value candidate using the generated plurality of weighing signals and vibration signals (Step S14). In Step S14, the calculation unit 23 generates a first weighing value candidate from the weighing signal itself, for example. The calculation unit 23 generates the second weighing value candidate according to the above equation (1) based on the weighing signal and the vibration signal.

Thereby, the calculation unit 23 generates a first weighing value candidate based on the weighing signal. The calculation unit 23 generates a second weighing value candidate based on the weighing signal and the vibration signal. Further, the calculation unit 23 compares the standard deviation of the amplitude for each waveform of the first weighing value candidate. The calculation unit 23 selects the first weighing value candidate having the smallest standard deviation of the amplitude of the waveform as the first standard deviation for optimizing the first weighing value candidate. Similarly, the calculation unit 23 compares the standard deviation of the amplitude for each waveform of the second weighing value candidate. The calculation unit 23 selects the second weighing value candidate having the smallest standard deviation of the waveform amplitude as the second standard deviation for optimizing the second weighing value candidate. The controller 8 compares the first weighing value candidate and the second weighing value candidate (Step S15). In Step S15, the calculation unit 23 compares the first standard deviation with the second standard deviation to determine which of the first weighing value candidate and the second weighing value candidate has better accuracy information.

The controller 8 determines whether or not the second standard deviation is equal to or less than the first standard deviation (Step S16). For example, when it is determined that the second standard deviation is equal to or less than the first standard deviation (Step S16 : YES), the calculation unit 23 determines to perform the weighing process using the original vibration signal (Step S 17). Thereafter, the calculation unit 23 performs a weighing process (second weighing process) using the weighing signal and the vibration signal (Step S 18). On the other hand, when determining that the second standard deviation is larger than the first standard deviation (Step S16 : NO), the calculation unit 23 determines to perform the weighing process without using the original vibration signal (Step S 19). The calculation unit 23 performs a weighing process (first weighing process) using the weighing signal (that is, using only the original signal) (Step S 20). That is, the calculation unit 23 performs the first weighing process using only the original signal. Thereafter, the controller 8 ends the processing of FIG. 3.

As described above, according to the weighing apparatus 1, the controller 8 determines whether to perform the weighing process using the original vibration signal, based on the original signal and the original vibration signal output in case of so-called non-load weighing, the non-load weighing being a case both when the article P is not positioned on the second conveyor part 2b and when the conveyance unit 2 is in operation. The controller 8 performs the weighing process depending on the determining result of the controller 8. Thus, the weighing process according to the situations of the weighing apparatus 1 and the surroundings is performed based on the determining result of the controller 8 regarding whether it is more appropriate to use or not to use the original vibration signal of the AFV cell 14 in addition to the original signal of the weighing unit. The situations of the weighing apparatus 1 and the surroundings include, for example, vibrations of the weighing apparatus 1 itself, vibrations transmitted to the weighing apparatus 1 from the outside, and the like. This makes it possible to dispense with a setting operation, for example, by a designer or expert of the weighing apparatus 1. Therefore, according to the weighing apparatus 1, it is possible to reduce the burden of the setting work of the operator of the weighing apparatus 1 as to whether or not to use the original vibration signal of the AFV cell 14 in addition to the original signal of the weighing unit 1 when performing the weighing process for the load of the article P.

If the controller 8 determines to perform the weighing process using the original vibration signal, the controller 8 performs the weighing process using the original signal and the original vibration signal. If the controller 8 determines that the weighing process using the original vibration signal is not performed, the controller 8 performs the weighing process without using the original vibration signal. Accordingly, the weighing apparatus 1 may automatically select whether the original vibration signal is used when the controller 8 performs the weighing process by using the determining result of the controller 8.

The weighing apparatus 1 further comprises the display interface 7. The display interface 7 functions as the display unit that displays display information. The display interface 7 functions as the input unit that receives the selection-input operation for selecting whether or not to perform the weighing process using the original vibration signal. The controller 8 causes the display interface 7 to display display information about the comparison of the original signal and the original vibration signal. When the display interface 7 receives the selection-input operation to perform the weighing process using the original vibration signal, the controller 8 determines to perform the weighing process using the original vibration signal. When the display interface 7 receives the selection-input operation that the weighing process using the original vibration signal is not performed, the controller 8 determines that the weighing process using the original vibration signal is not performed. Thus, for example, the operator of the weighing apparatus 1 can select whether or not to perform the weighing process using the original vibration signal through the display interface 7 by referring to the information about the comparison regarding the original signal and the original vibration signal displayed on the display interface 7.

The controller 8 generates the weighing signal obtained by filtering the original signal with a predetermined digital filter. The controller 8 generates the first weighing value candidate based on the weighing signal. The controller 8 generates the vibration signal obtained by filtering the original vibration signal with the digital filter. The controller 8 generates the second weighing value candidate based on the weighing signal and the vibration signal. The controller 8 compares the first and second weighing value candidates. The controller 8 performs the determining process based on the result of the comparison. Accordingly, it is possible to determine whether it is appropriate to use the original vibration signal of the AFV cell 14 or not to use the original vibration signal of the AFV cell 14 based on the result of the comparison between the first weighing value candidate and the second weighing value candidate.

As the comparison, the controller 8 compares the smallest first standard deviation among the standard deviations of the waveforms of the first weighing value candidate with the smallest second standard deviation among the standard deviations of the waveforms of the second weighing value candidate. As a result, one of the waveform of the first weighing value candidate and the waveform of the second weighing value candidate having a smaller degree of variation in amplitude can be adopted as a candidate suitable for the weighing apparatus 1 and the surrounding situation.

While one embodiment of the weighing apparatus according to the present disclosure have been described above, the present disclosure is not limited to the above embodiment.

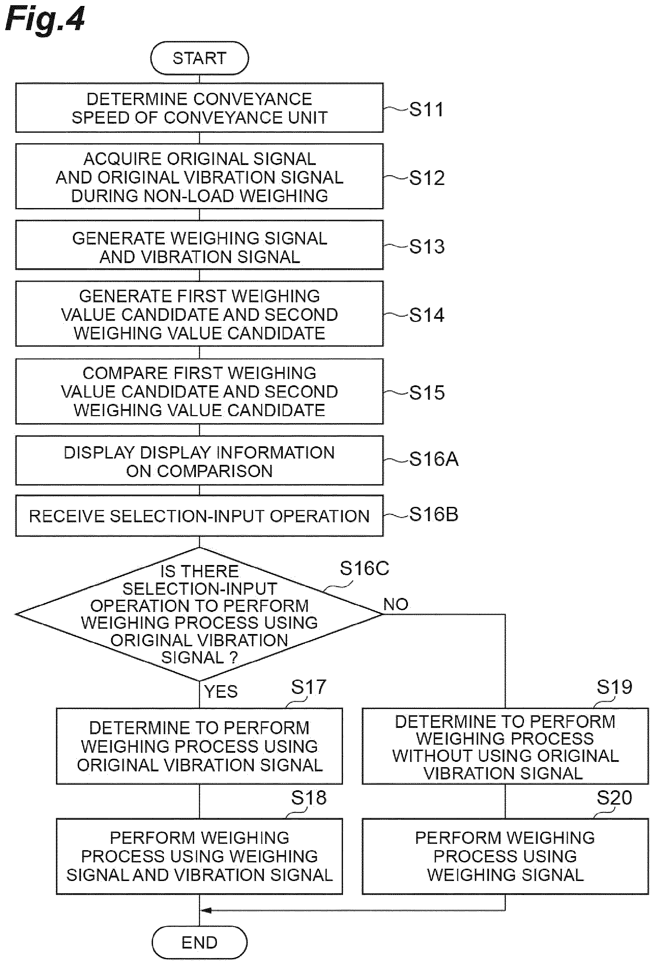

For example, in the above embodiment, the calculation unit 23 automatically selected the contents of the weighing process according to the determining result of the determining process. However, the operator of the weighing apparatus 1 may select via the input unit whether or not to perform the weighing process using the original vibration signal. In this case, the process of Step S16 in FIG. 3 may be replaced with processes of Steps S16A, S16B, and S16C as shown in FIG. 4, for example. The processes other than Steps S16A, S16B, and S16C in FIG. 4 are the same as the processes other than Step S16 in the process of FIG. 3, and thus the overlapping description will be omitted.

As shown in FIG. 4, in Step S16A, the controller 8 performs display of display information for the comparison performed in Step S15. In Step S16A, the controller 8 causes the display unit to display display information on the comparison of the original signal and the original vibration signal. For example, the output unit 24 may cause the touch panel 7a to display the value of the first standard deviation and the value of the second standard deviation as the display information for the comparison of the original signal and the original vibration signal. This can prompt the operator of the weighing apparatus 1 to consider and determine which of the first weighing value candidate and the second weighing value candidate is more suitable.

In Step S16B, the controller 8 receives a selection-input operation. In Step S16B, the output unit 24 may cause the touch panel 7a to display, for example, a button image or the like that can be touched by the operator of the weighing apparatus 1. This enables the operator of the weighing apparatus 1 to input either a selection-input operation of performing the weighing process using the original vibration signal or a selection-input operation of not performing the weighing process using the original vibration signal. When an operation of touching a button image or the like of the touch panel 7a is performed, the calculation unit 23 receives a selection-input operation by the operator of the weighing apparatus 1.

In Step S16C, upon receiving the selection-input operation (in response to the selection-input operation), the controller 8 determines whether or not there is a selection-input operation to perform the weighing process using the original vibration signal. When the calculation unit 23 receives the selection-input operation to perform the weighing process using the original vibration signal (Step S16C : YES), the calculation unit 11 determines to perform the weighing process using the original vibration signal (Step S 17). Thereafter, the calculation unit 23 performs a weighing process (second weighing process) based on the weighing signal and the vibration signal (Step S 18).

On the other hand, when the calculation unit 23 receives the selection-input operation that the weighing process using the original vibration signal is not performed (Step S16C : NO), the calculation unit 10 determines that the weighing process is performed without using the original vibration signal (Step S 19). That is, when the calculation unit 23 determines that there is no selection-input operation for performing the weighing process using the original vibration signal when receiving the selection-input operation (Step S16C : NO), the calculation unit 11 determines to perform the weighing process without using the original vibration signal (Step S 19). Thereafter, the calculation unit 23 performs a weighing process (first weighing process) using the weighing signal (Step S 20). That is, the calculation unit 23 performs the first weighing process using only the original signal. Thereafter, the controller 8 ends the processing of FIG. 4.

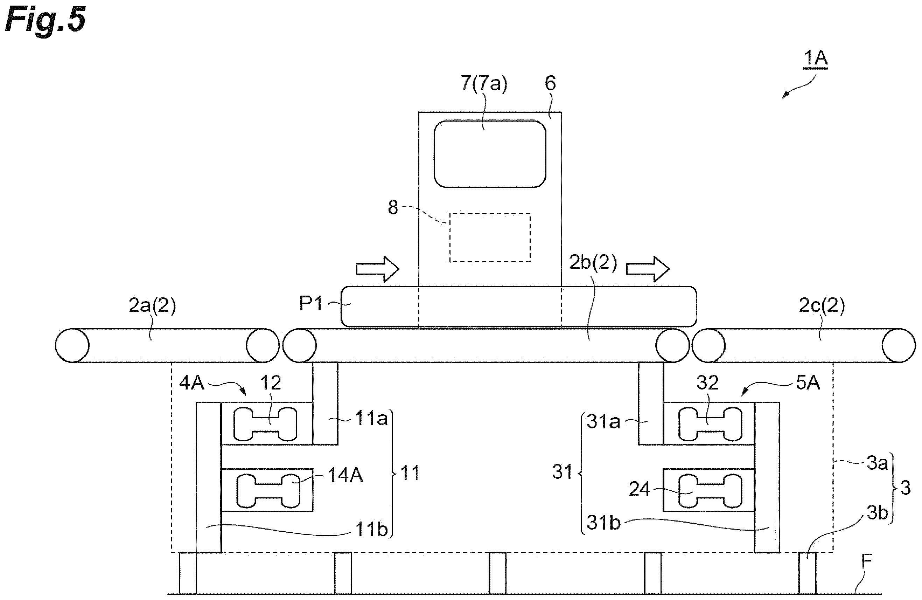

In the above embodiment, the weighing apparatus 1 including one weighing cell 12 and one AFV cell 14 has been exemplified. However, the weighing apparatus 1 can be modified, for example, like the weighing apparatus 1A shown in FIG. 5. In the description of the weighing apparatus 1A, the description of the same portions as those in the above embodiment will be omitted. Therefore, in the following description, differences from the above embodiment will be mainly described.

Figure 5 is a schematic block diagram of a weighing apparatus 1A according to a variation. As shown in FIG. 5, the weighing apparatus 1A is an apparatus for weighing the elongated article P1 along the conveying direction. The weighing apparatus 1A has a first weighing unit 4A and a second weighing unit 5A. The first weighing unit 4A is located upstream of the second conveyor part 2b. The second weighing unit 5A is located downstream of the second conveyor part 2b. The second weighing unit 5A has a strain body 31 and a weighing cell 32. Like the strain body 11, the strain body 31 includes a movable rigid body part 31a and a fixed rigid body part 31b. The movable rigid body part 31a supports the second conveyor part 2b. The fixed rigid body part 31b is fixed to frame 3.

Both when the conveyance unit 2 is in operation and when the article P2 is not being conveyed by the conveyance unit 2, the filtering unit 22 of the controller 8 selects one digital filter among the plurality of digital filters for each of the first original signal output from the first weighing unit 4A and the second original signal output from the second weighing unit 5A, for example. In this case, the digital filter selected based on the first original signal and the digital filter selected based on the second original signal may be the same. The digital filter selected based on the first original signal and the digital filter selected based on the second original signal may be different from each other. In this case, both when the article P2 is not conveyed by the conveyance unit 2 and when the conveyance unit 2 is in operation, the controller 8 adds the weighing signal obtained by filtering processing the original signal output from the first weighing unit 4A and the weighing signal obtained by filtering processing the original signal output from the first weighing unit 5A. Based on the total weighing signal thus obtained, the calculation unit 23 calculates the first weighing value candidate. Thereafter, the controller 8 performs the same processing as in the above embodiment.

Alternatively, the filtering unit 22 of the controller 8 selects one digital filter from the plurality of digital filters with respect to the sum original signal of the first original signal output from the first weighing unit 4A and the second original signal output from the second weighing unit 5A, for example. In this case, first, the controller 8 generates a summed original signal by summing the first original signal output from the first weighing unit 4A and the second original signal output from the second weighing unit 5A. Then, the calculation unit 23 selects one digital filter from the plurality of digital filters for the sum original signal. In this case, the controller 8 adds the original signal output from the first weighing unit 4A and the original signal output from the first weighing unit 5A both when the article P2 is not conveyed by the conveyance unit 2 and when the conveyance unit 2 is in operation. The calculation unit 23 calculates a pre-weighing signal by filtering processing the sum original signal. The calculation unit 23 generates a first weighing value candidate based on the weighing signal obtained by filtering processing the summed original signal. Thereafter, the controller 8 performs the same processing as in the above embodiment by using the first weighing value candidate.

The first weighing unit 4A has a first AFV cell (disturbance vibration detecting unit) 14A in addition to the strain body 11 and the weighing cell 12. The first AFV cell 14A detects disturbance vibration. The first AFV cell 14A outputs a first original vibration signal corresponding to the disturbance vibration. The first original vibration signal output from the first AFV cell 14A is an analog signal. The first original vibration signal is converted from analog to digital by an A/D converter included in the first AFV cell 14A, for example.

Similar to the first weighing unit 4A, the second weighing unit 5A has a second AFV cell (disturbance vibration detecting unit) 34 in addition to the strain body 31 and the weighing cell 32. The second AFV cell 34 is a member for detecting disturbance vibration of the weighing apparatus 1A including the weighing cell 32. The second AFV cell 34 is provided in the fixed rigid body part 31b. The second AFV cell 34 detects vibration transmitted from the floor F to the weighing apparatus 1A, vibration of the conveyance unit 2, and the like. The second AFV cell 34 detects disturbance vibration. The second AFV cell 34 outputs a second original vibration signal corresponding to the disturbance vibration. The second original vibration signal output from the second AFV cell 34 is an analog signal. The second original vibration signal is converted from analog to digital by an A/D converter included in the second AFV cell 34, for example.

After the digitally converted first original vibration signals are added to each other, filtering processing may be performed on the added signal in the filtering unit 22. After the digitally converted second original vibration signals are added to each other, filtering processing may be performed on the added signal in the filtering unit 22. Alternatively, a corresponding A/D converter may perform pre-filtering processing on the digitally converted first original vibration signals, and after the first original vibration signals on which the pre-filtering processing has been performed are summed each other, the filtering unit 22 may perform filtering processing on the summed signal. A corresponding A/D converter may perform pre-filtering processing on the digitally converted second original vibration signals, and after the second original vibration signals on which the pre-filtering processing has been performed are summed each other, the filtering unit 22 may perform filtering processing on the summed signal. A corrected original signal can be generated in the same manner as in the above-described embodiment by treating the sum signal subjected to the filtering processing by any of the methods described above as the vibration signal in the above-described embodiment.

Also in the weighing apparatus 1A as described above, similar operation and effect as those of the above-described embodiment are exhibited. According to the weighing apparatus 1A, weight of the long article P1 can be accurately weighed along the conveying direction.

In the above embodiment and the above modification, the accuracy information is calculated based on the standard deviation of the amplitude of the waveform obtained by applying the digital filter to the original signal and the original vibration signal. However, the accuracy information is not limited to this example. For example, the accuracy information may be calculated based on a value at an arbitrary point of a waveform obtained by applying a digital filter to the original signal and the original vibration signal. For example, the accuracy information may be calculated based on a standard deviation of a differential value of an amplitude of a waveform obtained by applying a digital filter to an original signal and an original vibration signal. The calculation result may be the standard deviation itself of the differential value of the amplitude of the waveform. In these cases, it is possible to reduce the influence of vibration generated when the article is conveyed to the weighing apparatus. Therefore, the digital filter suitable for the weighing apparatus and the surrounding situation can be automatically selected more appropriately. Alternatively, the accuracy information may be calculated based on the standard deviation of the second derivative value of the amplitude of the waveform obtained by applying a digital filter to the original signal and the original vibration signal. The calculation result may be the standard deviation itself of the second derivative value of the amplitude of the waveform. Alternatively, the accuracy information may be calculated by subtracting the minimum value of the amplitude from the maximum value of the amplitude of the waveform. In this case, accuracy information can be easily calculated.

In the above-described embodiment and the above-described modification, the weighing unit outputs the digital signals as an original signal and an original vibration signal to the outside. However, the weighing unit is not limited to this example. The weighing unit may output the acquired analog signal to the outside. In this case, for example, the controller may convert the analog signal into a digital signal. Further, the disturbance vibration detecting unit is not limited to the AFV cell as in the above embodiment and the above modification. The disturbance vibration detecting unit may output an original vibration signal corresponding to the disturbance vibration received by the weighing unit. The disturbance vibration detecting unit may be a sensor that detects displacement, force, acceleration, or the like.

In the above embodiments and variations, the weighing process was either based on both the original signal and the original vibration signal, or based only on the original signal without the original vibration signal. However, the weighing process is not limited to this example. For example, the weighing process may be performed taking into account additional signals different from the original signal and the original vibration signal. The weighing process may be performed so as to increase the degree of reflection of the original vibration signal compared to a case where the original vibration signal is not used.

In the above embodiment and the above modification, the calculation unit 23 generates the first weighing value candidate based on the weighing signals. The calculation unit 23 generates a second weighing value candidate based on the weighing signal and the vibration signals. However, the generation of the first weighing value candidate and the second weighing value candidate by the calculation unit 23 is not essential. For example, the calculation unit 23 may generate only one weighing signal obtained by filtering the original signal with a predetermined digital filter. The calculation unit 23 may generate only one vibration signal obtained by filtering the original vibration signal with the digital filter. The calculation unit 23 may perform comparison between the obtained one weighing signal and the obtained one vibration signal. The calculation unit 23 may perform the determining process based on the comparison result.

**Claims**

1.  A weighing apparatus comprising:

    a conveyance unit (2) configured to convey an article; a weighing unit (4) configured to output an original signal corresponding to a weighing component of a force applied to the conveyance unit (2);
    a disturbance vibration detecting unit configured to output an original vibration signal corresponding to a disturbance vibration received by the weighing unit (4); and
    a processing unit (8) configured to perform a weighing process based on at least the original signal when the article is positioned on the conveyance unit (2) and when the conveyance unit is in operation,
    **characterized in that**
    the processing unit (8) is configured to perform a determining process of determining whether to perform the weighing process using the original vibration signal based on both the original signal and the original vibration signal, the original signal and the original vibration signal being output both when the article is not positioned on the conveyance unit (2) and when the conveyance unit is in operation, and
    the processing unit (8) is configured to perform the weighing process according to the determining result of the determining process.

2.  The weighing apparatus according to claim 1, wherein

    the processing unit (8) is configured to perform the weighing process using both the original signal and the original vibration signal when the processing unit (8) determines to perform the weighing process using the original vibration signal, and
    the processing unit (8) is configured to perform the weighing process without using the original vibration signal when the processing unit (8) determines not to perform the weighing process using the original vibration signal.

3.  The weighing apparatus according to claim 1, further comprising:

    a display unit (7) configured to output display information; and
    an input unit (7) configured to receive a selection-input operation for selecting whether to perform the weighing process using the original vibration signal,
    wherein
    the processing unit (8) is configured to cause the display unit to output the display information about comparison of the original signal and the original vibration signal,
    the processing unit (8) is configured to determine to perform the weighing process using the original vibration signal in response to the selection-input operation received indicating that the original vibration signal is used in the weighing process,

the processing unit (8) is configured to determine not to perform the weighing process using the original vibration signal in response to the selection-input operation received indicating that the original vibration signal is not used in the weighing process.

4. The weighing apparatus according to any one of claims 1 to 3, wherein
the processing unit (8) is configured to:

generate a weighing signal obtained by filtering the original signal with a predetermined digital filter and a vibration signal obtained by filtering the original vibration signal with the predetermined digital filter,

generate a first weighing value candidate based on the weighing signal,

generate a second weighing value candidate based on both the weighing signal and the vibration signal,

perform a comparison between the first weighing value candidate and the second weighing value candidate, and

perform the determining process based on a result of the comparison.

5. The weighing apparatus according to claim 4, wherein
the processing unit (8) is configured to compare a smallest first standard deviation of a waveform of the first weighing value candidate with a smallest second standard deviation of a waveform of the second weighing value candidate as the comparison.

**Patentansprüche**

1. Wägevorrichtung, die aufweist:

eine Fördereinheit (2), die zum Fördern eines Artikels konfiguriert ist;
eine Wägeeinheit (4), die konfiguriert ist, ein ursprüngliches Signal auszugeben, das einer Wiegekomponente einer auf die Fördereinheit (2) ausgeübten Kraft entspricht;
eine Störschwingungs-Erfassungseinheit, die konfiguriert ist, ein ursprüngliches Schwingungssignal auszugeben, das einer von der Wägeeinheit (4) aufgenommenen Störschwingung entspricht; und
eine Verarbeitungseinheit (8), die konfiguriert ist, einen Wiegeprozess mindestens basierend auf dem ursprünglichen Signal durchzuführen, wenn der Artikel auf der Fördereinheit (2) positioniert ist und wenn die Fördereinheit in Betrieb ist,

**dadurch gekennzeichnet, dass**
die Verarbeitungseinheit (8) konfiguriert ist, einen Bestimmungsprozess zum Bestimmen durchzuführen, ob der Wiegeprozess unter Verwendung des ursprünglichen Schwingungssignals durchgeführt werden soll, basierend sowohl auf dem ursprünglichen Signal als auch dem ursprünglichen Schwingungssignal, wobei das ursprüngliche Signal und das ursprüngliche Schwingungssignal sowohl ausgegeben werden, wenn der Artikel nicht auf der Fördereinheit (2) positioniert ist, als auch, wenn die Fördereinheit in Betrieb ist, und
die Verarbeitungseinheit (8) konfiguriert ist, den Wiegeprozess entsprechend dem Bestimmungsergebnis des Bestimmungsvorgangs durchzuführen.

2. Wägevorrichtung nach Anspruch 1, wobei

die Verarbeitungseinheit (8) konfiguriert ist, den Wiegeprozess unter Verwendung sowohl des ursprünglichen Signals als auch des ursprünglichen Schwingungssignals durchzuführen, wenn die Verarbeitungseinheit (8) bestimmt, den Wiegeprozess unter Verwendung des ursprünglichen Schwingungssignals durchzuführen, und
die Verarbeitungseinheit (8) konfiguriert ist, den Wiegeprozess ohne Verwendung des ursprünglichen Schwingungssignals durchzuführen, wenn die Verarbeitungseinheit (8) bestimmt, den Wiegeprozess nicht unter Verwendung des ursprünglichen Schwingungssignals durchzuführen.

3. Wägevorrichtung nach Anspruch 1, die ferner aufweist:

eine Anzeigeeinheit (7), die konfiguriert ist, Anzeigeinformationen auszugeben; und
eine Eingabeeinheit (7), die konfiguriert ist, eine Auswahl-Eingabebedienung zum Auswählen zu empfangen, ob der Wiegeprozess unter Verwendung des ursprünglichen Schwingungssignals durchgeführt werden soll,
wobei
die Verarbeitungseinheit (8) konfiguriert ist, die Anzeigeeinheit zu veranlassen, die Anzeigeinformation über einen Vergleich des ursprünglichen Signals und des ursprünglichen Schwingungssignals auszugeben,
die Verarbeitungseinheit (8) konfiguriert ist, zu bestimmen, den Wiegeprozess unter Verwendung des ursprünglichen Schwingungssignals durchzuführen, als Reaktion darauf, dass die empfangene Auswahl-Eingabebedienung anzeigt, dass das ursprüngliche Schwingungssignal im Wiegeprozess verwendet wird, die Verarbeitungseinheit (8) konfiguriert ist, zu bestimmen, den Wiegeprozess nicht unter Verwendung des ursprünglichen Schwingungssignals durchzuführen, als Reaktion darauf, dass die empfangene Auswahl-Eingabebedienung anzeigt, dass das ursprüngliche Schwingungssignal nicht im Wiegeprozess verwendet wird.

4. Wägevorrichtung nach einem der Ansprüche 1 bis 3, wobei die Verarbeitungseinheit (8) konfiguriert ist:

ein Wiegesignal, das durch Filtern des ursprünglichen Signals mit einem vorbestimmten digitalen Filter erhalten wird, und ein Schwingungssignal zu erzeugen, das durch Filtern des ursprünglichen Schwingungssignals mit dem vorbestimmten digitalen Filter erhalten wird, einen ersten Wiegewertkandidaten basierend auf dem Wiegesignal zu erzeugen, einen zweiten Wiegewertkandidaten basierend sowohl auf dem Wiegesignal als auch auf dem Schwingungssignal zu erzeugen, einen Vergleich zwischen dem ersten Wiegewertkandidaten und dem zweiten Wiegewertkandidaten durchzuführen, und den Bestimmungsprozess basierend auf einem Ergebnis des Vergleichs durchzuführen.

5. Wägevorrichtung nach Anspruch 4, wobei die Verarbeitungseinheit (8) konfiguriert ist, eine kleinste erste Standardabweichung einer Wellenform des ersten Wiegewertkandidaten mit einer kleinsten zweiten Standardabweichung einer Wellenform des zweiten Wiegewertkandidaten als den Vergleich zu vergleichen.

**Revendications**

1. Appareil de pesage, comprenant :

une unité de transport (2) prévue pour transporter un article ; une unité de pesage (4) prévue pour émettre un signal d'origine correspondant à une composante de pesage d'une force appliquée à l'unité de transport (2) ; une unité de détection de vibration parasite prévue pour émettre un signal de vibration d'origine correspondant à une vibration parasite reçue par l'unité de pesage (4) ; et une unité de traitement (8) prévue pour effectuer un processus de pesage sur la base au moins du signal d'origine lorsque l'article est positionné sur l'unité de transport (2) et que l'unité de transport est en fonctionnement, **caractérisé en ce que** l'unité de traitement (8) est prévue pour effectuer un processus de détermination s'il convient d'effectuer le processus de pesage au moyen du signal de vibration d'origine sur la base à la fois du signal d'origine et du signal de vibration d'origine, le signal d'origine et le signal de vibration d'origine étant les deux émis lorsque l'article n'est pas positionné sur l'unité de transport (2) et que l'unité de transport est en fonctionnement, et l'unité de traitement (8) est prévue pour effectuer le processus de pesage en fonction du résultat de détermination du processus de détermination.

2. Appareil de pesage selon la revendication 1, où

l'unité de traitement (8) est prévue pour effectuer le processus de pesage au moyen à la fois du signal d'origine et du signal de vibration d'origine lorsque l'unité de traitement (8) détermine qu'il convient d'effectuer le processus de pesage au moyen du signal de vibration d'origine, et l'unité de traitement (8) est prévue pour effectuer le processus de pesage sans recourir au signal de vibration d'origine lorsque l'unité de traitement (8) détermine qu'il ne convient pas d'effectuer le processus de pesage au moyen du signal de vibration d'origine.

3. Appareil de pesage selon la revendication 1, comprenant en outre :

une unité d'affichage (7) prévue pour sortir des informations d'affichage ; et une unité d'entrée (7) prévue pour recevoir une opération d'entrée de sélection pour sélectionner s'il convient d'effectuer le processus de pesage au moyen du signal de vibration d'origine, où l'unité de traitement (8) est prévue pour cause l'unité d'affichage to output les informations d'affichage about comparaison du signal d'origine et du signal de vibration d'origine, l'unité de traitement (8) est prévue pour déterminer qu'il convient d'effectuer le processus de pesage au moyen du signal de vibration d'origine en réaction à l'opération d'entrée de sélection reçue, indiquant que le signal de vibration d'origine est utilisé lors du processus de pesage, l'unité de traitement (8) est prévue pour déterminer qu'il ne convient pas d'effectuer le processus de pesage au moyen du signal de vibration d'origine en réaction à l'opération d'entrée de sélection reçue, indiquant que le signal de vibration d'origine n'est pas utilisé lors du processus de pesage.

4. Appareil de pesage selon l'une des revendications 1 à 3, où l'unité de traitement (8) est prévue pour :

   générer un signal de pesage obtenu par filtrage du signal d'origine avec un filtre numérique prédéfini et un signal de vibration obtenu par filtrage du signal de vibration d'origine avec le filtre numérique prédéfini,
   générer une première valeur de pesage candidate sur la base du signal de pesage,
   générer une deuxième valeur de pesage candidate sur la base à la fois du signal de pesage et du signal de vibration, effectuer une comparaison entre la première valeur de pesage candidate et la deuxième valeur de pesage candidate, et
   effectuer le processus de détermination sur la base d'un résultat de comparaison.

5. Appareil de pesage selon la revendication 4, où l'unité de traitement (8) est prévue pour comparer une première déviation standard minimale d'une forme d'onde de la première valeur de pesage candidate avec une deuxième déviation standard minimale d'une forme d'onde de la deuxième valeur de pesage candidate, en tant que comparaison.

*Fig.1*

EP 3 882 583 B1

# Fig.2

| | |
|---|---|
| RECEIVING UNIT | ~21 |
| FILTERING UNIT | ~22 |
| CALCULATION UNIT | ~23 |
| OUTPUT UNIT | ~24 |
| STORAGE UNIT | ~25 |

~8

# Fig.3

```
                    ( START )
                         │
   ┌─────────────────────────────────────┐
   │      DETERMINE CONVEYANCE            │~S11
   │   SPEED OF CONVEYANCE UNIT           │
   └─────────────────────────────────────┘
                         │
   ┌─────────────────────────────────────┐
   │       ACQUIRE ORIGINAL SIGNAL        │
   │   AND ORIGINAL VIBRATION SIGNAL      │~S12
   │     DURING NON-LOAD WEIGHING         │
   └─────────────────────────────────────┘
                         │
   ┌─────────────────────────────────────┐
   │      GENERATE WEIGHING SIGNAL        │~S13
   │       AND VIBRATION SIGNAL           │
   └─────────────────────────────────────┘
                         │
   ┌─────────────────────────────────────┐
   │       GENERATE FIRST WEIGHING        │
   │    VALUE CANDIDATE AND SECOND        │~S14
   │      WEIGHING VALUE CANDIDATE        │
   └─────────────────────────────────────┘
                         │
   ┌─────────────────────────────────────┐
   │        COMPARE FIRST WEIGHING        │
   │    VALUE CANDIDATE AND SECOND        │~S15
   │      WEIGHING VALUE CANDIDATE        │
   └─────────────────────────────────────┘
                         │
```

S16

FIRST STANDARD DEVIATION ≧ SECOND STANDARD DEVIATION ?

NO

YES     S17                   S19

| DETERMINE TO PERFORM WEIGHING PROCESS USING ORIGINAL VIBRATION SIGNAL | DETERMINE TO PERFORM WEIGHING PROCESS WITHOUT USING ORIGINAL VIBRATION SIGNAL |

S18                        S20

| PERFORM WEIGHING PROCESS USING WEIGHING SIGNAL AND VIBRATION SIGNAL | PERFORM WEIGHING PROCESS USING WEIGHING SIGNAL |

( END )

# Fig.4

START

DETERMINE CONVEYANCE
SPEED OF CONVEYANCE UNIT — S11

ACQUIRE ORIGINAL SIGNAL
AND ORIGINAL VIBRATION SIGNAL — S12
DURING NON-LOAD WEIGHING

GENERATE WEIGHING SIGNAL
AND VIBRATION SIGNAL — S13

GENERATE FIRST WEIGHING
VALUE CANDIDATE AND SECOND — S14
WEIGHING VALUE CANDIDATE

COMPARE FIRST WEIGHING
VALUE CANDIDATE AND SECOND — S15
WEIGHING VALUE CANDIDATE

DISPLAY DISPLAY INFORMATION
ON COMPARISON — S16A

RECEIVE SELECTION-INPUT OPERATION — S16B

IS THERE
SELECTION-INPUT
OPERATION TO PERFORM            S16C
WEIGHING PROCESS USING
ORIGINAL VIBRATION
SIGNAL ?                          NO

YES          S17

DETERMINE TO PERFORM
WEIGHING PROCESS USING
ORIGINAL VIBRATION SIGNAL

S19

DETERMINE TO PERFORM
WEIGHING PROCESS
WITHOUT USING ORIGINAL
VIBRATION SIGNAL

S18

PERFORM WEIGHING
PROCESS USING WEIGHING
SIGNAL AND VIBRATION SIGNAL

S20

PERFORM WEIGHING
PROCESS USING
WEIGHING SIGNAL

END

19

# Fig.5

EP 3 882 583 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000039355 A
- EP 3121570 A1
- JP 2007101333 A
- JP 5901126 B